# FASCICULE DE BREVET EUROPEEN

(11) **EP 0 423 037 B1**
(45) Date de publication et mention de la délivrance du brevet: **21.12.1994**
(21) Numéro de dépôt: 90402853.7
(22) Date de dépôt: 12.10.1990
(51) Int. Cl.: G05D 3/12

(54) **Dispositif de commande asservie**
Steuerungsvorrichtung
Servo control device

(30) Priorité: 12.10.1989 FR 8913362
(43) Date de publication de la demande: 17.04.1991
(73) Titulaire: Laudinet, Christian, F-63100 Clermont Ferrand (FR)
(72) Inventeur: Laudinet, Christian, F-63100 Clermont Ferrand (FR)
(74) Mandataire: Hasenrader, Hubert

(56) Documents cités:
- WO-A-86/06445
- DE-A- 2 726 350
- DE-A- 3 721 693
- GB-A- 844 396
- US-A- 3 872 773
- OLHYDRAULIK UND PNEUMATIK. vol. 9, no. 10, octobre 1965, MAINZ DE pages 377 -385; "hydraulishe rechenvertärker"

## Description

La présente invention concerne un dispositif de commande asservie, comme par exemple et non limitativement un dispositif destiné à asservir la commande d'embrayage dans un véhicule automobile.

Un certain nombre de véhicules sont équipés de dispositifs de commande asservie de la commande d'embrayage, soit de série par le constructeur, soit à l'unité par l'utilisateur ou par un artisan.

On rencontre divers problèmes dans la conception et la réalisation de tels dispositifs, qui ne sont pas toujours résolus au mieux dans les dispositifs couramment dans le commerce.

En particulier, l'asservissement en position et en effort du servomoteur de commande par rapport à un organe mobile d'entrée n'est pas toujours aussi précis qu'il serait souhaitable. Souvent, il est seulement prévu que le servomoteur soit commandé en tout ou rien dans l'un au moins des sens de fonctionnement.

En outre, l'automatisation du fonctionnement est parfois sommaire et ne tient en général pas compte de l'évolution de l'usure des organes commandés.

Afin de pallier ces inconvénients, la présente invention propose un dispositif de commande asservie, comprenant :
- un organe mobile d'entrée
- un servomoteur formé d'un boîtier, d'une paroi mobile divisant le boîtier en deux chambres, l'une en communication par une conduite avec une source de fluide sous haute pression, et l'autre en communication par une conduite avec une source de fluide sous basse pression,
- un organe mobile de sortie mû par ladite paroi mobile
- au moins une valve à au moins deux positions interposée dans l'une desdites conduites,
- un dispositif d'actionnement sensible aux positions relatives de l'organe d'entrée et de l'organe de sortie pour déplacer la valve dans l'une ou l'autre de ses positions, le dispositif d'actionnement comprenant un élément d'entrée rotatif entraîné par l'organe d'entrée et terminé par un pignon cônique, un élément de réaction rotatif,aligné avec l'élément d'entrée, entraîné par l'organe de sortie et terminé par un second pignon cônique en regard du premier, une chape tourillonnant autour des deux éléments d'entrée et de sortie, et un troisième pignon cônique monté rotatif par rapport à ladite chape et en engrènement avec le premier et le second pignons côniques, la chape coopérant avec ladite valve.

Les détails et avantages de l'invention apparaîtront plus clairement à la lecture de la description qui va suivre, en se référant aux dessins annexés, dans lesquels :
- la figure 1 est une vue schématique et en coupe partielle d'un dispositif selon l'invention appliqué à la commande d'un embrayage de véhicule,
- la figure 2 est une vue de détail agrandie prise suivant la ligne 2-2 à la figure 1, et
- la figure 3 est une vue partielle d'une variante du dispositif.

Le dispositif désigné dans son ensemble par la référence 10, est destiné dans le mode de réalisation illustré à commander un mécanisme d'embrayage 12 d'un véhicule, non représenté, disposé entre un moteur 11 et une boîte de vitesses 13.

Les éléments internes du mécanisme d'embrayage ne sont pas essentiels à la compréhension de l'invention et n'ont pas été représentés.

Une pédale 14, articulée sur un support 16 fixé à la structure du véhicule, entraîne une extrémité d'un câble 18 gaîné dont l'autre extrémité est reliée à un levier d'actionnement 20 du mécanisme d'embrayage. Ce levier est destiné à écarter les plateaux du mécanisme d'embrayage ou à les laisser se rapprocher sous l'action de ressorts de rappel comme bien connu des hommes de métier, et pour cette raison les plateaux et autres éléments ne sont pas représentés.

Un ressort annexe 22 rappelle la pédale en position relevée.

Le dispositif de commande asservie comprend un servomoteur 24, formé d'un boîtier 26 divisé en deux chambres 28, 30, par une paroi mobile 32 formant piston. Comme bien connu, l'étanchéité entre les deux chambres est maintenue tout au long de la course de la paroi mobile au moyen d'une membrane annulaire à déroulement 34, fixée à sa périphérie interne à la paroi mobile, et à sa périphérie externe au boîtier. La paroi mobile porte un organe de sortie 36, sous la forme d'une tige traversant l'une des chambres et la paroi avant 38 de boîtier correspondante, avec interposition d'un joint d'étanchéité 40 approprié.

La tige 36 est reliée par un câble de traction 42 au levier 20 afin d'entraîner celui-ci dans le sens correspondant au débrayage lorsque la paroi mobile s'éloigne de la paroi 38 du boîtier sous la différence de pression régnant dans les chambres 28, 30 du boîtier comme il sera vu plus loin. Au contraire, lorsque les deux chambres 28, 30 sont à la même pression, les ressorts internes du mécanisme d'embrayage provoquent l'embrayage et rappellent la paroi mobile 32 en rapprochement de la paroi 38 du boîtier.

La chambre 28 située du côté de la tige comporte un orifice 44 et un conduit de liaison 46 vers une source 48 de gaz à haute pression, constituée ici par l'atmosphère.

La chambre opposée 30 comporte un orifice 50 et un conduit de liaison 52 vers une valve 54 qui permet de mettre le conduit de liaison sélectivement en communication avec la même source de gaz à haute pression, ou avec une source de gaz à basse pression 56, par exemple un réservoir à vide relié au collecteur d'admission 57 d'un moteur 11 à essence, ou une pompe à vide.

La valve 54 illustrée à titre d'exemple comporte deux valves jumelées 54a, 54b, chacune à deux voies et deux positions. La première commande la communication entre la conduite 52, donc la chambre 30, et l'atmosphère ou source de haute pression 48, tandis que la seconde commande la communication entre la conduite 52 et la source à basse pression 56.

Chaque valve comporte un poussoir 58a, 58b qui commande la valve et qui est lui-même déplacé par un dispositif d'actionnement 62 comme il sera vu ci-après.

Le dispositif d'actionnement 62 comprend :
- un organe mobile d'entrée 64, ici sous la forme d'un arbre rotatif, entraîné dans ce mode de réalisation par un pignon 66 en engrènement avec une crèmaillère 68, elle-même entraînée en va-et-vient longitudinalement par un moteur 70 ; il comprend également un organe mobile de réaction 72, sous la forme d'un second arbre rotatif entraîné par un pignon 74 en engrènement avec une crémaillère 76 définie sur la tige de sortie du servomoteur.

Les deux arbres d'entrée 64 et de réaction 72 sont disposés en alignement et se terminent par des pignons côniques 78, 80 d'entrée de réaction respectivement situés face à face.

Une chape 82 tourillonne autour des arbres 64, 72 ; elle porte un arbre 84, perpendiculaire aux arbres d'entrée et de réaction, en libre rotation et qui se termine par un pignon conique de différentiel 86, lequel engrène avec les deux pignons coniques d'entrée et de réaction.

La chape comporte enfin deux surfaces de came, 88a, 88b respectivement, qui sont en contact avec les deux poussoirs 58a, 58b des valves 54a, 54b.

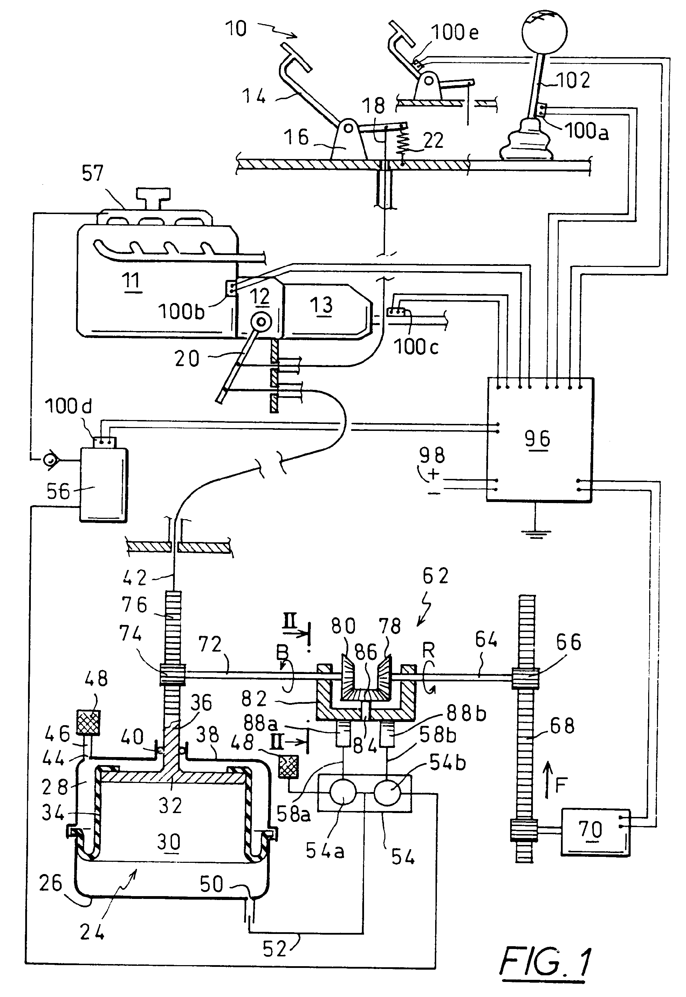

Dans le mode de réalisation illustré à la figure 1, les poussoirs sont situés côte à côte et dirigés perpendiculairement à l'axe commun des arbres 64, 72 et les surfaces de came sont définies sur deux secteurs situés côte à côte sur la chape 82 dans le sens axial.

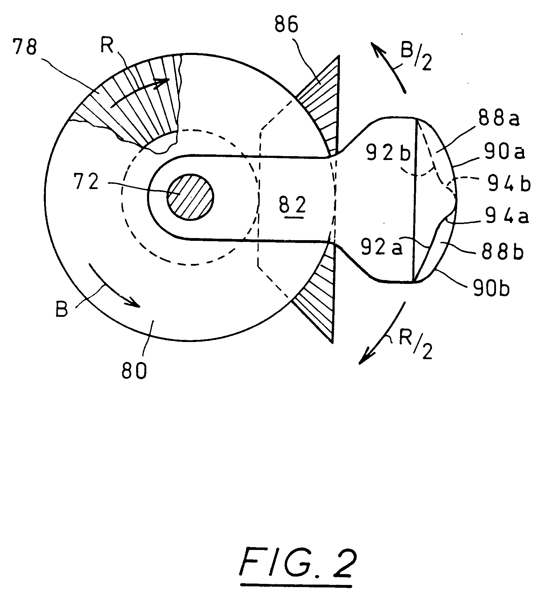

Les deux surfaces de came ont des contours radiaux illustrés en superposition à la figure 2, l'un en traits pleins, l'autre en tirets, généralement symétriques par rapport au plan radial contenant les deux plongeurs.

Ainsi, chaque surface comprend une zone de grand rayon 90a, 90b telle que les poussoirs 58a, 58b sont déplacés en position de fermeture des opercules de valve, et une zone de petit rayon 92a, 92b telle que les poussoirs sont déplacés en position d'ouverture des opercules de valve. Les zones de petit et de grand rayon 90a, 92a ; 90b, 92b, des deux cames sont raccordées par des zones de transition 94a, 94b.

Les deux surfaces sont calées angulairement l'une par rapport à l'autre de telle sorte que leurs deux zones de grand rayon 90a, 90b se rejoignent en se recouvrant légèrement juste avant le début de leurs zones de transition respectives 94a, 94b.

Enfin, le moteur d'entraînement 70 de la crémaillère d'entrée 68 est raccordé à une unité de commande 96, elle-même reliée à une source de courant 98 d'une part, et à un certain nombre de capteurs 100 et/ou détecteurs associés à divers organes du véhicule. Cette unité de commande 96 comporte les circuits électroniques logiques nécessaires pour commander la mise en route du moteur d'entraînement 70, dans un sens ou dans l'autre selon des critères et des séquences prédéterminés.

On décrira maintenant une séquence type de fonctionnement en commande de débrayage/embrayage.

Dans la condition de départ, les différents organes représentés occupent les positions illustrées aux figures 1 et 2. En particulier, la pédale d'embrayage 14 est en position relevée correspondant à la condition d'engagement du mécanisme d'embrayage 12, le piston 32 de servomoteur est tiré par le câble de traction 42 et la tige 36 jusqu'à une position proche de la paroi avant 38 du boîtier 26, la chape 82 occupe une position angulaire telle que les deux zones de grand diamètre 90a, 90b de ses surfaces de came 88a, 88b soient en contact avec les poussoirs 58a, 58b de valve 51, 54b, ce qui maintient celles-ci en position de fermeture, la crémaillère d'entrée 68 est rétractée dans une position de départ et le moteur 70 n'est pas alimenté.

En réponse à un signal déterminé, par exemple un signal délivré par un capteur 100a associé au levier de manoeuvre 102 de la boîte de vitesses 13, l'unité de commande 96 provoque l'alimentation du moteur 70 d'entraînement de la crémaillère qui se déplace dans la direction indiquée par la flèche F à la figure 1. Ce déplacement entraîne la rotation de l'arbre d'entrée 64 et de son pignon associé 78, dans le sens de la flèche R aux figures 1 et 2.

En un premier temps, tant que les deux valves restent en condition fermée, le piston 32 de servomoteur reste immobile, de même que la tige de sortie 36, l'arbre 72 et le pignon 80 de réaction.

Il en résulte une rotation de la chape 82, provoquée par le pignon de différentiel 86 dans le même sens que la rotation de l'arbre d'entrée 64 mais d'étendue angulaire moitié R/2.

Du fait de la rotation de la chape 82, les surfaces de rampe 88a, 88b se déplacent par rapport aux poussoirs 58a, 58b. La première surface de came 88a reste en contact avec le poussoir 58a de la première valve 54a par sa zone de grand rayon 90a, de telle sorte que cette valve reste fermée et que la conduite 52 reste isolée par rapport à l'atmosphère 48. Par contre, la rotation amène la zone de transition 94b de la seconde surface de came en regard du poussoir 58b qui se déplace donc dans le sens d'ouverture de la valve 54b. La conduite 52 est mise en communication avec la source de dépression 56. La réduction résultante de pression dans la chambre 30 du servomoteur engendre l'apparition d'une force sur le piston 32 qui se déplace donc en éloignement de la paroi 38 du boîtier en entraînant le câble de traction 42 et le levier 20 d'embrayage lorsque les forces de rappel des ressorts évoqués auparavant ont été vaincues.

Le déplacement simultané de la crémaillère 76 portée par la tige de sortie 36 entraîne une rotation correspondante de l'arbre de réaction 72, dans le sens indiqué par la flèche B opposé au sens de rotation de l'arbre d'entrée 64. cette rotation de l'arbre de réaction a pour effet de ramener la chape 82 par l'intermédiaire du pignon satellite 86 en rotation inverse B/2 jusqu'à ce que la seconde surface de came 88b revienne en contact avec le second poussoir 58b de valve par sa zone de grand rayon 90b, ramenant ainsi cette valve en position de fermeture.

L'homme de métier comprendra donc aisément que tant que le déplacement de la crémaillère d'entrée 68 se poursuit, il se produit un déplacement correspondant de la tige de sortie 36, dans le rapport inverse des diamètres des pignons d'entrée 66 et de sortie 74.

Lorsque l'on cesse d'alimenter le moteur d'entraînement 70 la tige d'entrée 68 s'immobilise, de même que l'arbre d'entrée 64, et le mouvement de la tige de sortie 36 cesse, avec un très léger retard, lorsque la chape 82 est revenue dans la position illustrée à la figure 2 correspondant à la fermeture des deux valves.

Le déplacement de la tige de sortie 36 est transmis au levier d'embrayage qui pivote provoquant le débrayage du mécanisme d'embrayage.

Lorsque l'unité de commande 96 déclenche l'alimentation inverse du moteur 70, la tige d'entrée 68 se déplace en sens inverse.

Comme la tige de sortie reste initialement immobile, la chape 82 tourne momentanément en sens inverse, de sorte que la première surface de came 88a prend contact avec le poussoir 58a de la première valve au niveau de sa zone de transition 94a, ce qui provoque l'ouverture de cette valve 54a et la mise à l'atmosphère 48 de la chambre 30 arrière du servomoteur, tandis que la seconde surface de came 88b maintient la seconde valve fermée.

La force exercée sur le piston 32 diminue et les ressorts du mécanisme d'embrayage 12 rappellent le piston 32 en direction de la paroi avant 38. Ce déplacement de la tige 36 produit une rotation inverse de la chape 82 et la fermeture de la première valve 54a.

Les déplacements inverses et légèrement décalés dans le temps de la tige d'entrée 68 et de la tige de sortie 36 se poursuivent jusqu 'à ce que l'unité de commande 96 interrompe l'alimentation du moteur 70. La tige d'entrée 68 s'immobilise, puis la tige de sortie 36 s'immobilise également avec un léger retard. La tige de sortie est alors revenue à sa position de départ correspondant à l'engagement de l'embrayage 12.

En fait, ce retour pourra se dérouler en deux phases :
- en une première phase l'unité de commande 96 alimentera le moteur d'entraînement 70 de façon à faire effectuer à la tige d'entrée 68, à une première vitesse prédéterminée, une première partie de course de retour correspondant au retour des organes du mécanisme d'embrayage 12 en condition de léchage, puis après écoulement d'un laps de temps prédéterminé, à faire effectuer à la tige d'entrée 68 le reste de sa course en une seconde phase jusqu'à sa position de repos à une seconde vitesse prédéterminée, inférieure à la première.

Afin de tenir compte de l'usure des organes du mécanisme d'embrayage 12, on prévoira dans l'unité de commande 96 des moyens propres à vérifier que le mécanisme d'embrayage 12 a atteint ou non la condition de léchage.

Par exemple, on prévoira des capteurs de vitesse 100b, 100c de rotation sur les arbres d'entrée et de sortie du mécanisme d'embrayage et l'unité de commande comprendra un étage de comparaison des signaux délivrés par ces deux capteurs, qui n'autorise le déclenchement de la seconde phase que lorsque l'écart relatif entre les deux vitesses de rotation est passé au-dessous d'un seuil prédéterminé avant expiration du laps de temps prédéterminé. Si cet écart relatif ne diminue pas au-dessous du seuil pendant ce laps de temps, l'unité de commande 96 alimente le moteur 70 pour déplacer la tige d'entrée 68 d'une distance incrémentale et vérifie à nouveau que l'écart relatif des vitesses diminue en dessous du seuil avant expiration du laps de temps.

L'unité de commande 96 mémorise alors la valeur de la nouvelle course de retour au point de léchage, égale à la précédente, augmentée d'autant d'incréments que nécessaire.

Bien entendu, l'unité de commande 96 comprend un certain nombre de circuits destinés à modifier ou inhiber son fonctionnement pour tenir compte de circonstances particulières notamment :
l'inhibition totale lorsque :
- la dépression en amont de la valve, mesurée par un vacuostat 100d approprié, n'a pas atteint une valeur minimale,
- la tension délivrée par la source de courant 98 tombe au-dessous d'une valeur prédéterminée.
   l'inhibition du processus de réembrayage lorsque :
- la vitesse du véhicule est inférieure à une limite basse, par exemple 20 km/heure et la pédale de frein est actionnée, comme indiqué par un capteur approprié 100e,
- la vitesse véhicule est pratiquement nulle, par exemple inférieure à 5 km/heure et le régime moteur est insuffisant, par exemple inférieur à 1 000 tours/minute, ceci afin d'éviter de "caler" le moteur en cas de réembrayage si le moteur tourne au ralenti,
- le régime moteur théorique, calculé d'après la vitesse véhicule réelle pour le rapport engagé dépasse un seuil maximal admissible pour le moteur du véhicule, par exemple 6 000 tours/minute.
- le contact 100a du levier de vitesse 102 est resté activé,
- sur option, les ceintures de sécurité du conducteur et des passagers ne sont pas attachées, afin d'éviter le démarrage du véhicule,
- les pédales de frein et d'accélérateur sont actionnées ensemble,
- le frein à main est actionné.
   - Le fonctionnement est modifié lorsque :
- la marche arrière est engagée. Dans ce cas, l'unité de commande réduit la vitesse de déplacement de la tige d'entrée 68 pendant la seconde phase au moins du processus de réembrayage, et le cas échéant pendant les deux phases, afin de provoquer un réembrayage plus progressif qu'en marche avant.
- le levier de vitesse 102, ou les organes de la boite de vitesses 13, occupe la position correspondant au point mort. Dans ce cas, le processus de réembrayage se déroule en une seule phase,
- le starter est activé, ou à défaut la température moteur est basse, le régime minimal du moteur au-dessus duquel le réembrayage est permis est augmenté.

De préférence, la seconde phase de réembrayage se fera à une vitesse asservie à l'allure à laquelle le régime moteur rejoint, au rapport de boîte près, la vitesse véhicule.

Toutes les séquences de fonctionnement exposées ci-avant n'ont été données qu'à titre d'exemple et l'homme de métier pourra y apporter toutes les modifications et/ou tous les compléments qu'il jugera nécessaires.

Il apparaîtra en outre clairement que lorsque le dispositif ne fonctionne pas, soit à la suite d'une panne, soit à la suite d'une inhibition totale, les manoeuvres de débrayage/embrayage peuvent être effectuées de façon conventionnelle, le câble de traction 42 ne constituant aucune entrave du fait de sa souplesse.

Bien entendu, selon le type de véhicule considéré, l'homme de métier pourra adapter l'unité de commande en fonction des conditions spécifiques à ce véhicule.

Par ailleurs, le dispositif et/ou son montage peuvent faire l'objet de nombreuses variantes ou particularités ci-après :

Le câble de traction 42 peut être attaché à la pédale 14 au lieu du levier de manoeuvre 20 du dispositif d'embrayage 12.

La crémaillère 76 de réaction peut être définie non sur la partie de tige 36 située du côté du câble de traction 42, mais sur un prolongement de tige situé du côté opposé par rapport au piston et traversant de façon étanche la paroi arrière 26 du boîtier.

Le moteur d'entraînement 70 peut être de tout type convenable, avantageusement un moteur pas à pas. La liaison mécanique entre le moteur d'entraînement 70 et la tige d'entrée 68 sera du type non-réversible.

Le moteur d'entraînement 70 peut entraîner directement l'arbre d'entrée 64 par un moto-réducteur.

Si nécessaire, il pourra s'agir d'un moteur-frein.

La valve 54 pourra être du type à trois voies/trois positions comportant un poussoir unique.

Le servomoteur 24 pourra être à double effet. Dans ce cas, les deux conduites 46, 52 aboutissant aux deux chambres 28, 30 de servomoteur seront commandées chacune par un ensemble de valve comme décrit ci-avant, ou encore par une seule valve à 4 voies/3 positions.

Les valves pourront être de tout type connu :
- valve à tiroir
- valve à clapet
- valve à étranglement
- valve à boisseau

On pourra même utiliser la chape 82 elle-même en tant qu'élément d'une valve à éléments rotatifs.

Les surfaces de came 88a, 88b peuvent être ménagées directement sur la chape, par moulage, usinage, ou autre procédé, ou encore être ménagées sur des pièces distinctes elles-mêmes rapportées sur la chape 82.

On pourra de même remplacer les surfaces de came par des embiellages appropriés entre la chape rotative 82 et le, ou les poussoirs 58a, 58b de valve.

Parmi les avantages procurés par l'invention, on citera :
- une grande fiabilité et une grande sécurité de fonctionnement,
- la possibilité de concevoir un grand nombre d'applications,
- la réduction de la consommation en fluide sous haute pression et/ou sous basse pression aux justes besoins nécessaires. En effet, on remarque que dès que le piston de servomoteur 32 atteint la position requise la communication vers la source de haute et/ou basse pression est interrompue.
- l'asservissement s'adapte aux efforts nécessaires en toutes circonstances : en effet, si à la suite de diverses circonstances la résistance exercée par les ressorts de rappel du mécanisme d'embrayage et par les frottements des divers organes concernés fluctue, la chambre arrière 30 ne sera mise sous dépression que dans la mesure strictement nécessaire pour vaincre cette résistance.

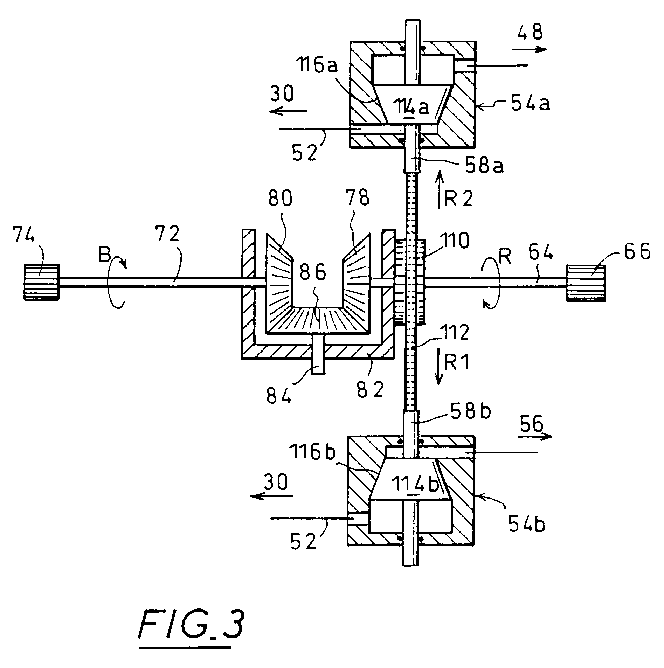

Selon une autre variante, illustrée partiellement à la figure 3, la chape 82 porte une roue dentée 110 fixée à la chape et coaxiale à l'arbre d'entrée 64 mais sans liaison avec celui-ci. Cette roue dentée engrène avec une crémaillère 112 dont les deux extrémités opposées sont en appui contre les poussoirs 58a, 58b des deux valves 54a, 54b.

Le fonctionnement est analogue à celui du mode de réalisation précédent.

Lorsque l'arbre d'entrée 64 tourne dans le sens R, la chape 82 tourne initialement dans le même sens d'un angle moitié, entraînant la crémaillère 112 dans le sens R1 à la figure. La crémaillère 112 enfonce le poussoir 58b de la valve 54b, dont l'opercule 114e se lève de son siège 116b, ce qui met la chambre de vérin sous dépression.

La rotation résultante de l'arbre de réaction 72 provoque une rotation en retour de la chape 82 et un déplacement en sens inverse R2 de la crémaillère, ce qui laisse l'opercule de valve 114b se refermer sur son siège 116b. Pendant ce temps l'autre valve 54a est restée fermée.

En sens inverse, lorsque l'arbre d'entrée 64 tourne dans le sens contraire, la crémaillère 112 commence par se déplacer dans le sens R2, ouvrant ainsi la valve 54b ce qui met la chambre de vérin 30 à l'atmosphère 48. L'arbre de réaction 72 ramène ensuite la chape 82, en sens inverse, ce qui provoque la fermeture de la valve 64a, tandis que la valve 54b est restée fermée.

En position centrée de la crémaillère 112, les deux valves sont fermées.

On évite ainsi les problèmes éventuels d'imprécision liés au mode de réalisation précédent, notamment la zone de recouvrement des deux surfaces de came.

## Revendications

1. Dispositif de commande asservie comprenant:
- un organe mobile d'entrée (68)
- un servomoteur (24) formé d'un boîtier (26), d'une paroi mobile (32) divisant le boîtier en deux chambres (28, 30) l'une (28) en communication par une conduite (46) avec une source (48) de fluide sous haute pression, et l'autre (30) en communication par une conduite (52) avec une source (56) de fluide sous basse pression,
- un organe mobile de sortie (76) mû par ladite paroi mobile (32),
- au moins une valve (54a, 54b) à au moins deux positions interposée dans l'une desdites conduites,
- un dispositif d'actionnement (62) sensible aux positions relatives de l'organe d'entrée (68) et de l'organe de sortie (76) pour déplacer la valve (54a, 54b) dans l'une ou l'autre de ses positions, caractérisé en ce que le dispositif d'actionnement comprend : un élément d'entrée (64) rotatif entraîné par l'organe d'entrée (68) et terminé par un pignon cônique (78), un élément de réaction rotatif (72), aligné avec l'élément d'entrée (64), entraîné par l'organe de sortie (76) et terminé par un second pignon cônique (80) en regard du premier, une chape (82) tourillonnant autour des deux éléments d'entrée et de réaction, et un troisième pignon cônique (86) monté rotatif par rapport à ladite chape (82) et en engrènement avec le premier (78) et le second (80) pignons côniques, la chape(82) coopérant avec ladite valve (54a, 54b).

2. Dispositif selon la revendication 1, caractérisé en ce que l'organe d'entrée (68) est constitué par une crémaillère entraînée en va et vient par un moteur (70) et en ce que l'élément d'entrée (64) porte un pignon (66) un engrènement avec ladite crémaillère.

3. Dispositif selon l'une ou l'autre des revendications 1 et 2 caractérisé en ce que l'organe de sortie (76) est constitué par une crémaillère formée sur une tige de sortie (36) solidaire de la paroi mobile (32) et entraînée en va et vient par celle-ci, et en ce que l'élément de réaction (72) porte un pignon (74) en engrènement avec ladite crémaillère.

4. Dispositif selon l'une quelconque des revendications 1 à 3, caractérisé en ce que ladite chape (82) comporte au moins une surface de came (88a ; 88b) en contact avec un poussoir (58a ; 58b) de ladite valve (54a ; 54b).

5. Dispositif selon la revendication 4, caractérisé en ce que ladite surface de came (88a ; 88b) est définie sur un élément rapporté sur la chape (82).

6. Dispositif selon l'une quelconque des revendications 1 à 3, caractérisé en ce que la chape porte une roue dentée (110) et en ce qu'il comprend une troisième crémaillère (112) en engrènement avec ladite roue dentée, et en contact avec un poussoir (58a ; 58b) de ladite valve (54a ; 54b).

7. Dispositif selon l'une quelconque des revendications 1 à 6, caractérisé en ce qu'il comprend deux valves à deux voies et deux positions (54a ; 54b), et en ce que ladite chape coopère en sens opposés avec lesdites valves.

8. Dispositif selon la revendication 7, caractérisé en ce que l'une des chambres (28) de servomoteur (24) est reliée en permanence à l'atmosphère (48) en tant que source de haute pression, et l'autre chambre (30) est reliée aux deux valves (54a 54b), celles-ci étant reliées à leur tour à l'atmosphère (48) et à une source de dépression (56, 57) respectivement.

## Patentansprüche

1. Steuerungsvorrichtung, bestehend aus:
- einem beweglichen Einlaßorgan (68),
- einem Servomotor (24) mit einem Gehäuse (26), einer beweglichen Wandung (32), die das Gehäuse in zwei Kammern (28, 30) teilt, wobei die eine (28) über eine Leitung (46) mit einer Hochdruck-Flüssigkeitsquelle (48) in Verbindung steht und die andere (30) über eine Leitung (52) mit einer Niederdruck-Flüssigkeitsquelle (56) in Verbindung steht,
- einem beweglichen Außlaßorgan (76), das durch die genannte bewegliche Wandung (32) bewegt wird,
- mindestens einem Ventil (54a, 54b) mit mindestens zwei Stellungen, das in einer der genannten Leitungen angeordnet ist,
- einer Betätigungsvorrichtung (62), die abhängig von den jeweiligen Stellungen des beweglichen Einlaßorgans (68) und des beweglichen Außlaßorgans (76) das Ventil (54a, 54b) in dessen eine oder andere Stellung bringt,
dadurch gekennzeichnet, daß die Betätigungsvorrichtung aus einem drehbaren Einlaßelement (64), das durch das Einlaßorgan (68) bewegt wird und mit einem Kegelrad (78) endet, aus einem mit dem Einlaßelement (64) ausgerichteten, drehbaren Reaktionselement (72), das durch das Auslaßorgan (76) bewegt wird und mit einem zweiten Kegelrad (80) endet, das sich dem ersten gegenüber befindet, aus einer um das Einlaßelement und das Reaktionselement drehenden Haube (82) sowie aus einem dritten Kegelrad (86), das zu der genannten Haube (82) drehbar angebracht ist und sich mit dem ersten (78) und dem zweiten (80) Kegelrad in Eingriff befindet, besteht, wobei die Haube (82) mit dem genannten Ventil (54a, 54b) zusammenwirkt.

2. Vorrichtung nach Anspruch 1,
dadurch gekennzeichnet, daß das Einlaßorgan (68) aus einer Zahnstange besteht, die von einem Motor (70) hin- und herbewegt wird, und daß das Einlaßelement (64) ein Zahnrad (66) trägt, das mit der genannten Zahnstange in Eingriff ist.

3. Vorrichtung nach einem der Ansprüche 1 und 2,
dadurch gekennzeichnet, daß das Auslaßorgan (76) aus einer Zahnstange besteht, die an einer mit der beweglichen Wandung (32) fest verbundenen Auslaßstange (36) ausgebildet ist und von dieser hin- und herbewegt wird, und daß das Reaktionselement (72) ein Zahnrad (74) trägt, das mit der genannten Zahnstange in Eingriff ist.

4. Vorrichtung nach einem der Ansprüche 1 bis 3,
dadurch gekennzeichnet, daß die genannte Haube (82) mindestens eine Nockenfläche (88a; 88b) aufweist, die in Berührung mit einem Stößel (58a; 58b) des genannten Ventils (54a; 54b) ist.

5. Vorrichtung nach Anspruch 4,
dadurch gekennzeichnet, daß die genannte Nockenfläche (88a; 88b) auf einem Element definiert ist, das an der Haube (82) angebaut ist.

6. Vorrichtung nach einem der Ansprüche 1 bis 3,
dadurch gekennzeichnet, daß die Haube ein Zahnrad (110) trägt, und daß sie eine dritte Zahnstange (112) umfaßt, die sich mit dem genannten Zahnrad in Eingriff und mit einem Stößel (58a; 58b) des genannten Ventils (54a; 54b) in Berührung befindet.

7. Vorrichtung nach einem der Ansprüche 1 bis 6,
dadurch gekennzeichnet, daß sie zwei Zweiweg-Ventile mit zwei Stellungen (54a; 54b) umfaßt, und daß die genannte Haube mit den genannten Ventilen in entgegengesetzten Richtungen zusammenwirkt.

8. Vorrichtung nach Anspruch 7,
dadurch gekennzeichnet, daß die eine der Kammern (28) des Servomotors (24) ständig mit der Atmosphäre (48) als Hochdruckquelle verbunden ist, und die andere Kammer (30) mit den zwei Ventilen (54a; 54b) verbunden ist, wobei diese ihrerseits mit der Atmosphäre (48) bzw. mit einer Niederdruckquelle (56, 57) verbunden sind.

## Claims

1. Servo control device comprising:
- a movable input member (68)
- a servomotor (24) formed of a casing (26), of a movable wall (32) dividing the casing into two chambers (28, 30), one (28) communicating via a pipe (46) with a source (48) of fluid under high pressure, and the other (30) communicating via a pipe (52) with a source (56) of fluid under low pressure,
- a movable output member (76) moved by the said movable wall (32),
- at least one valve (54a, 54b) having at least two positions interposed in one of the said pipes,
- an actuating device (62) sensitive to the relative positions of the input member (68) and of the output member (76) in order to displace the valve (54a, 54b) into one or other of its positions, characterized in that the actuating device comprises: a rotary input element (64) driven by the input member (68) and ending in a bevel gear (78), a rotary reaction element (72), aligned with the input element (64), driven by the output element (76) and ending in a second bevel gear (80) facing the first, a clevis (82) swivelling about the input and reaction elements, and a third bevel gear (86) mounted so that it can rotate with respect to the said clevis (82) and in mesh with the first (78) and the second (80) bevel gears, the clevis (82) interacting with the said valve (54a, 54b).

2. Device according to Claim 1, characterized in that the input member (68) is made up of a rack driven to and fro by a motor (70) and in that the input element (64) has a gear (66) in mesh with the said rack.

3. Device according to one or other of Claims 1 and 2, characterized in that the output member (76) is made up of a rack formed on an output rod (36) secured to the movable wall (32) and driven to and fro by the latter, and in that the reaction element (72) carries a gear (74) in mesh with the said rack.

4. Device according to any one of Claims 1 to 3, characterized in that the said clevis (82) includes at least one cam surface (88a; 88b) in contact with a push rod (58a; 58b) of the said valve (54a; 54b).

5. Device according to Claim 4, characterized in that the said cam surface (88a; 88b) is defined on an element attached to the clevis (82).

6. Device according to any one of Claims 1 to 3, characterized in that the clevis carries a gear wheel (110) and in that it comprises a third rack (112) in mesh with the said gear wheel, and in contact with a push rod (58a; 58b) of the said valve (54a; 54b).

7. Device according to any one of Claims 1 to 6, characterized in that it comprises two two-way two-position valves (54a; 54b), and in that the said clevis interacts with the said valves in opposite directions.

8. Device according to Claim 7, characterized in that one of the servo motor (24) chambers (28.) is connected permanently to the atmosphere (48) as source of high pressure, and the other chamber (30) is connected to the two valves (54a; 54b), these in turn being connected to the atmosphere (48) and to a source of partial vacuum (56, 57) respectively.
